# EUROPEAN PATENT APPLICATION

(11) **EP 2 108 502 A1**
(43) Date of publication of application: **14.10.2009**
(21) Application number: 09250910.8
(22) Date of filing: 27.03.2009
(51) Int. Cl.: B29C 65/16, B23K 26/32, B32B 37/06

(54) **Method of making a transparency**

(30) Priority: 11.04.2008 US 101838
(71) Applicant: The Boeing Company, Chicago, IL 60606-1296 (US)
(72) Inventor: Bolser, David R., Florissant Missouri 63034 (US); Burns, Richard W., Edwardsville Illinois 62025-3106 (US); Berkel, Thomas R., Troy Illinois 62294 (US)
(74) Representative: McLeish, Nicholas Alistair Maxwell

(57) **Abstract**

A method of making a transparency is provided, the method comprising the steps of: layering at least two pieces of transparent thermoplastic, wherein a portion of at least one of the pieces of transparent thermoplastic is treated with a near infrared absorbing material; and, fusing the layered pieces of transparent thermoplastic together using a heat source to form an optically transparent and undistorted transparency. There is also provided a transparency comprising at least two layers of transparent thermoplastic, wherein the layers of transparent thermoplastic have been fused together using a heat source, such that the transparency is optically transparent and undistorted.

## Description

A method of making a transparency is provided. More particularly, a method of making a transparency by laser welding layers of optically transparent thermoplastics to achieve a transparency that is optically transparent and undistorted is provided.

Layers of thermoplastics are often joined together to assemble component parts such as windshields, windows, canopies, and assemblies thereof, for use in aircraft, vehicles, watercraft, and various other commercial products. A known method for joining such layers of thermoplastics together includes adhesively bonding the sheets together with an optically clear adhesive such as polyurethane, silicone, or polyvinyl butyral. However, a difficulty with this method is that air bubbles can become entrapped in the adhesive layer and can cause optical distortion of the layers. This can make clear viewing out of the windshields, windows, and canopies problematic. Another difficulty with the adhesive bonding method is that bonding the thermoplastic layers together with either a polyurethane, silicone, or polyvinyl butyral adhesive can be a complicated and time consuming process. A controlled coating application of the adhesive is required to maintain the uniformity of thickness desired and this can take time. A typical application may take several hours to properly heat under vacuum conditions. In addition, surface preparation of all of the thermoplastic layers being bonded is required which increases the steps involved, and thus, the overall process is more complex and time consuming. When two laminates are bonded together, the adhesive bonds to each laminate at a separate bond line. For example, the thermoplastic against one side of the adhesive is one bond line and the thermoplastic against the other side of the adhesive is another bond line. If a third thermoplastic is involved in the laminate, another two bond lines are formed.

Another known method for joining layers of transparent thermoplastics together is welding. Welding of thermoplastics requires heat, pressure, and time. Known methods for welding transparent thermoplastics include those in which heat is generated by mechanical movement such as vibration, ultrasonic, and friction stir welding; those in which heat is conducted to the joint from an external heat source such as a hot plate, hot gas, extrusion, and flash free welding; and those using electromagnetic radiation directly such as laser, induction, infrared, and microwave welding. Welding layers of transparent thermoplastics together by methods in which heat is generated by mechanical movement and methods in which heat is conducted to the joint from an external heat source can present a greater possibility of damage to the thermoplastic layers than laser welding because there is less control as to how much energy is applied to a joint as a function of time so that the strength limiting characteristics are compromised. Moreover, vibration welding and ultrasonic welding are not amenable to large area processing because the frictional forces become too great, they may generate flash or debris, and the residual stresses at the joint are not evenly distributed which may lead to optical distortion. An external heat source either melts the material through the full thickness thereby generating distortion, or heats the whole surface while the faying surfaces are apart, thereby making it difficult to ensure even heating.

Known methods for laser beam welding are defined by the wavelength of the laser being used. A wavelength from 780 nm (nanometers) to 1100 nm is typically used from diode, fiber, or Nd:YAG lasers. Known methods of laser welding, such as transmission laser welding that uses a carbon dioxide laser, are typically carried out using carbon black as the medium to absorb the laser energy. However, such methods have limited design and color flexibility, and color options are limited to dark and opaque colors at least in one side of the joint. In addition, known methods of laser welding are typically used for linear welds and do not cover large areas, i.e., greater than half an inch. In addition, although it is possible to weld multiple layers, the weld process is self-limiting in that the absorber loses its absorption capability under the action of heat, so overheating is unlikely. The carbon black absorber does not allow this.

Accordingly, there is a need for a method of making a transparency, and in particular, a need for a method of making a transparency by laser welding that does not have the problems associated with known methods.

This need for a method of making a transparency by laser welding that does not have the problems associated with known methods, as well as a unique, nonobvious, and advantageous method, is satisfied. None of the known methods provides all of the numerous advantages discussed herein. Unlike known methods, embodiments of the method for making a transparency by laser welding, as well as the transparency made by the method, have one or more of the following advantages: the method avoids the use of a discrete, optically clear adhesive layer, such as polyurethane or silicone, that can cause the formation of air bubbles and result in optical distortion; the method provides a transparency with a welded joint that is optically transparent and has no optical distortion; the method provides a transparency that has a stronger joint than an adhesively bonded joint; the method provides control as to how much energy is applied to a joint as a function of time so that strength of the joint is improved; the method produces only one bond line rather than two bond lines as with adhesive bonding, and the method is highly repeatable and consistent; the method fuses two or more layers of transparent thermoplastics together using laser heat and results in a structural bond that is optically clear; the method has low heat input and thus low risk of thermal distortion or thermal damage, and the outer surfaces of the component part remain unmelted; the method provides for accurate control of weld dimensions and position and easy manipulation of complex components; the method provides a cost effective and efficient method of making a transparency for component parts such as windshields, windows, canopies, and assemblies thereof, for use on aircraft, vehicles, watercraft, and various other applications requiring component parts made of transparent thermoplastics; the method enables aircraft windshield, window, and canopy transparency designs to support higher strength, lower cost, and lighter weight aircraft; the method provides a transparency that can be used for advanced aircraft transparencies; the method provides a transparency that has a hermetically sealed joint blocking any ingress of contaminating fluids or chemicals between windshield, window, or canopy transparency layers, and thus, the method provides more effective sealing between transparency layers compared to known methods; the method provides a greater weld width that can cover a larger area than known methods; the method provides color and design flexibility, complex geometry capabilities, and high speed welds; the method provides a transparency that does not have particulates or surface marring; and, the method provides benefits that result in greater durability and longer life of the component parts being welded.

In an embodiment of the invention, there is provided a method of making a transparency, the method comprising the steps of: layering at least two pieces of transparent thermoplastic, wherein a portion of at least one of the pieces of transparent thermoplastic is treated with a near infrared absorbing material; and, fusing the layered pieces of transparent thermoplastic together using a heat source to form an optically transparent and undistorted transparency.

In another embodiment of the invention, there is provided a method of making a laminate, the method comprising the steps of: providing at least two pieces of transparent thermoplastic; providing a clean surface of each transparent thermoplastic; treating a portion of at least one of the pieces of transparent thermoplastic with a near infrared absorbing coating; layering the at least two pieces of transparent thermoplastic; clamping the layered pieces of transparent thermoplastic in place with a clamp element; and, laser welding the layered pieces of transparent thermoplastic together to form an optically transparent and undistorted laminate.

In another embodiment of the invention, there is provided a transparency comprising at least two layers of transparent thermoplastic, wherein the layers of transparent thermoplastic have been fused together using a heat source, such that the transparency is optically transparent and undistorted.

The foregoing and other advantages and features, and the manner in which the same are accomplished, will become more readily apparent upon consideration of the following detailed description taken in conjunction with the accompanying drawings which illustrate preferred and exemplary embodiments, but which are not necessarily drawn to scale, wherein:
Fig. 1 is a side view of an aircraft showing various areas that may be welded using the method of the invention;
Fig. 2 is a perspective view of a laser application to transparent thermoplastic pieces forming a T-joint using the method of the invention;
Fig. 2a is an enlargement of the 2a portion of Fig. 2;
Fig. 3 is a front view of the T-joint of Fig. 2;
Fig. 4 is a perspective view of a laser application to two layers of transparent thermoplastics using the method of the invention;
Fig. 4a is an enlargement of the 4a portion of Fig. 4;
Fig. 5 is a perspective view of a laser application to three layers of transparent thermoplastics using the method of the invention; and,
Fig. 5a is an enlargement of the 5a portion of Fig. 5.

Embodiments of the invention will now be described more fully hereinafter with reference to the accompanying drawings, in which some, but not all embodiments of the invention are shown. Indeed, several different embodiments may be provided and should not be construed as limited to the embodiments set forth herein. Rather, these embodiments are provided so that this disclosure will be thorough and complete and will fully convey the scope of the invention to those skilled in the art. Like numbers refer to like elements throughout.

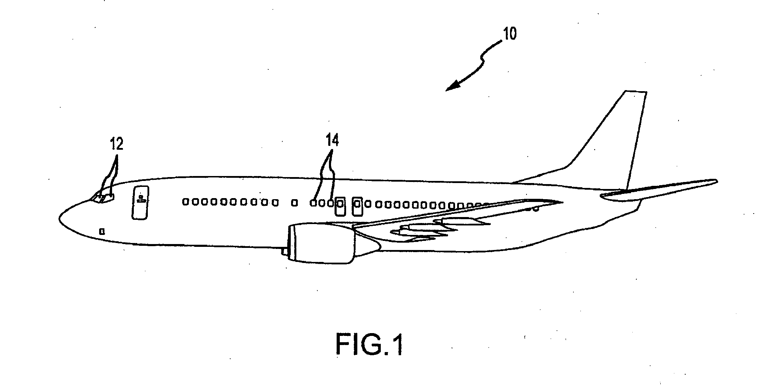

Referring now to the drawings, Fig. 1 is a side view of an airplane 10 showing various areas that can be welded using the method of the invention. Such areas may include windshields 12, passenger windows 14, and aircraft canopies (not shown) which are transparent enclosures over the cockpits of certain aircraft, such as light airplanes and fighter airplanes. The invention can be used for next generation aircraft transparencies, such as injection molded transparencies or those fabricated with embedded materials or liners, to meet specific performance requirements. For example, a windshield can be welded to a canopy, or two layers of a canopy can be welded together. The method of the invention enables aircraft windshield, window, and/or canopy transparency designs to support higher strength, lower cost, and lighter weight aircraft. Transparencies made with the method of the invention have a greater strength, are more repeatable and consistent, and provide more effective sealing between transparency layers compared to known methods. The transparency made by the method of the invention may be used in aircraft, vehicles such as automobiles and trucks, watercraft such as boats and ships, and various other applications requiring component parts made of transparent thermoplastics. Accordingly, one of ordinary skill in the art will recognize and appreciate that the inventive method of making the transparency can be used in any number of applications requiring component parts made of transparent thermoplastics.

In an embodiment of the method of the invention, a method is provided that comprises the step of layering at least two pieces of transparent thermoplastics, wherein a portion of at least one of the pieces of transparent thermoplastic is treated with a near infrared absorbing material. The transparent thermoplastic is preferably optically transparent to infrared radiation but may also be optically transparent to radio frequency or electromagnetic radiation. Preferably, the transparent thermoplastic comprises polycarbonates, acrylics, polyamides such as nylons, polystyrene, polymethylmethacrylate, polyesters, polyolefins such as polyethylene and polypropylene, polyetheretherketone (PEEK), acrylonitrile butadiene styrene (ABS), polyvinyl chloride (PVC), polyvinylidene fluoride (PVDF), polyurethane, ethylene tetrafluoroethylene (ETFE), or cellulose acetate. More preferably, the transparent thermoplastic used is a polycarbonate sheet such as Lexan 9030 obtained by SABIC Innovative Plastics of Pittsfield, Massachusetts (Lexan is a registered trademark of General Electric Company of Pittsfield, Massachusetts). However, other suitable transparent thermoplastics may also be used. The transparent thermoplastic may comprise rigid or flexible plastics or laminates. The transparent thermoplastic may be in the form of sheets or layers that are substantially flat and of a uniform thickness, workpieces, patterned surfaces, or other suitable shapes and forms. The transparent thermoplastic may be of any suitable size and thickness. Preferably, the number of transparent thermoplastic pieces or layers fused or welded together at once is two, three, or four. However, greater than four pieces or layers may also be fused or welded together at once.

Preferably, the near infrared absorbing material is a coating or resin comprising a solvent based solution with absorbing additives. The solvent used may be acetone, methyl ethyl ketone, ethanol, 1-methoxy-2-propanol, or another suitable solvent. The absorbing additives used may be organic pigments and dyes that can absorb infrared laser light, or another suitable absorbing additive. More preferably, the near infrared absorbing material is Clearweld coating or resin, obtained from Gentex Corporation having a United States office in Zeeland, Michigan (Clearweld is a registered trademark of The Welding Institute of Cambridge, England). Such infrared absorbing material absorbs at targeted near infrared wavelength ranges to weld efficiently while reducing color in the visible range. Such near infrared absorbing material provides the ability to weld clear or any color transparent thermoplastic, as long as one or both transparent thermoplastics transmit the infrared wavelength of the laser. Thermoplastics may be of color, either translucent or opaque, as long as one or both layers allow an infrared laser beam to be transmitted through them. The near infrared absorbing material coatings typically absorb infrared light with a wavelength between 940 nm (nanometers) to 1064 nm. The near infrared absorbing material resins typically absorb infrared light with a wavelength between 800 nm to 1064 nm, depending on which absorber is used. The infrared absorbing resins involve the additive being added to the bottom layer of the transparent thermoplastic. The top layer has no absorbing additive, and thus it is transmissive to laser light. The near infrared absorbing material does not affect the appearance of the joint or piece that is being fused or welded. Preferably, a portion of at least one of the pieces of the transparent thermoplastic, such as the faying surface (the surface that is about to be joined or welded), is treated or coated with the near infrared absorbing material using a raster pattern preferably at a rate of 18 nl/mm² (nanoliters per square millimeter). However, the raster pattern may also be used at other suitable rates. Preferably, only one piece of the two mating pieces needs to be coated. When the near infrared absorbing material is applied to the transparent thermoplastic, the solvent evaporates quickly, typically in 2 seconds to 7 seconds after application, leaving a thin layer of absorbing material at the joint interface. Typical volumes of near infrared absorbing material used may range from 80 nl/mm² to 120 nl/mm². Such material is preferably low in viscosity (e.g., 1 cPs (centipoise) to 5 cPs) and may be applied with a needle tip, microsolenoid, spray, ultrasonic atomization, or other suitable application method. An application method should allow for deposition of a controlled amount of the near infrared absorbing material to controlled positions at the joint interface. The near infrared absorbing material is preferably applied in very small quantities at the surface of the transparent thermoplastic joint to be welded and thus such application has minimal or no effect on the mechanical properties of the joint. The near infrared absorbing material may be applied in pure form at the interface or in a carrier, such as a film, of the same thermoplastic as the transparent thermoplastics to be joined. In the pure form, the near infrared absorbing material remains at or near the joint, where it may or may not be altered by the heating process. Once the laser interacts with the near infrared absorbing material, coloration is lost under optimized parameters. The near infrared absorbing material may be selected for use with a particular type of laser, or more specifically for a wavelength of radiation from a laser, and the temperature rise produced as the absorber heats in the laser beam is sufficient to melt a wide range of thermoplastics. The range of absorption makes the near infrared absorbing material useful for transmission laser welding with Nd:YAG (neodymium-doped yttrium aluminum garnet), fiber, and diode lasers.

The method further comprises the step of fusing the layered pieces of transparent thermoplastic together using a heat source to form an optically transparent and undistorted transparency. Preferably, the step of fusing the layered pieces together using a heat source comprises laser beam welding. Preferably, the heat source is a laser in a near infrared radiation wavelength range. Preferred lasers may be Nd:YAG lasers, fiber lasers, diode lasers, or other suitable lasers in the near infrared radiation wavelength range. Unlike carbon dioxide lasers, these lasers have wavelengths that transmit through unpigmented plastics. Moreover, near infrared radiation lasers pass their light efficiently with little or no heat generated. In particular, the nature in which a diode laser is constructed makes it relatively easy to assemble a single laser, capable of operating at two separate or combined wavelengths, simply by switching the power to different stacks of diodes. Such a diode laser may be capable of producing 150 W (Watts) of power at wavelengths of either 808 nm or 940 nm. 300 W is available if both wavelengths are used simultaneously. The laser energy may be applied to the transparent thermoplastics in a number of ways, including from a point source optic or fiber optic unit, by local scanning of a laser beam either directly or through a mask or from a fixed array of laser diodes shaped to the form of the joint line, and the component may be manipulated beneath a stationary laser system, or the laser beam may be manipulated around the joint line. The laser energy is applied to a well defined location. With laser welding, the top transparent thermoplastic layer is preferably transmissive at the laser wavelength, while the bottom transparent thermoplastic layer preferably absorbs the laser energy either throughout the bulk of the layer or at the surface only. The transparent thermoplastic layers are preferably in contact and miscible when heated. Thickness limitations of the transparent thermoplastic layers are dependent on the amount of laser energy transmission applied. In general, the transparent thermoplastic materials preferably have similar or overlapping melting ranges and preferably are chemically compatible. Most thermoplastics are highly transmissive from wavelengths of approximately 700 nm to 2000 nm. In an embodiment of the method, a 150 W (Watt), direct diode laser with a laser power of 100 W (Watts) at a welding speed of 1.0 m/min (meter/minute) may be used with a laser spot size of 5 mm (millimeters) at the height of the joint. A laser weld of straight lines using a scanning raster pattern with a 2 mm overlap of the laser spot may be made. Preferably, the optically transparent and undistorted transparency is a welded joint that has a width in the range of 8 inches to 72 inches. The method of the invention may make greater width welds than known methods, as welds with about 8 inch widths may be made, whereas known methods are capable of making welds of only about 1/8 of an inch. Types of joints that may be laser welded with the method of the invention include lap joints, butt joints, T-joints, tongue and groove joints, I-joints, scarf joints, and other suitable joints.

The method may further comprise, prior to the layering step and treating with near infrared absorbing material, the step of providing a clean surface of at least one of the at least two pieces of transparent thermoplastic that is to be exposed to the heat source. The quality of the surface of the transparent thermoplastics to be used is important. Clean surfaces are preferred at the interface and any area exposed to the laser, such as the top surface or transmitting substrate, to prevent marking or burning of the surfaces. Smooth surfaces are also preferred. Parallel surfaces are also preferred to ensure complete contact of the transparent thermoplastics. The clean surface may be provided by physically cleaning the surface or covering each piece of transparent thermoplastic with a protective layer of plastic film to protect it from being scratched or marred, and removing such protective layer prior to welding.

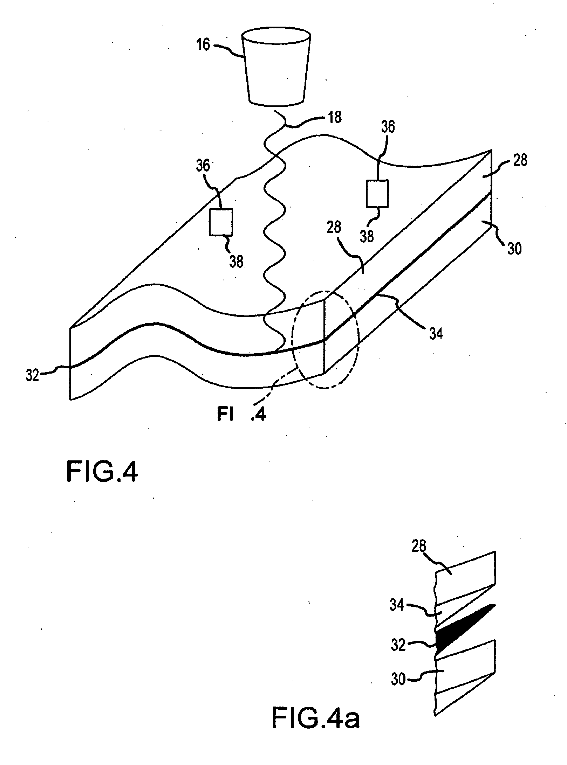

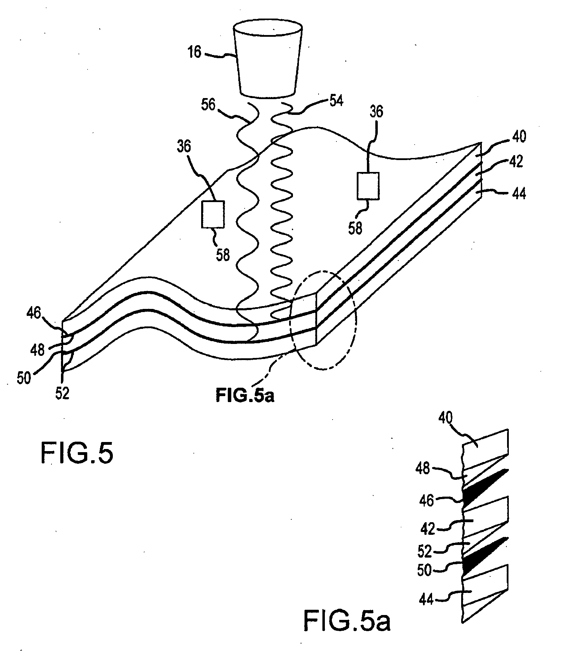

The method may further comprise the step, prior to the fusing step, of clamping the layered pieces of transparent thermoplastic in place with a clamp element (see Figs. 4, 5, reference number 36). Prior to clamping the layered pieces together, it is preferred that the layered pieces are positioned and fit together in the desired position for welding. Clamping pressure ensures intimate contact between pieces. Clamping helps to flatten rough surfaces and provides contact if the pieces are not parallel in configuration. In addition, clamping helps to conduct heat between the pieces, assists with diffusion of thermoplastic chains between the surfaces of the pieces to generate the weld, and prevents separation of the pieces during cooling. Preferred clamping pressures may be from 0.14 MPa (megaPascal) to 5.5 MPa (20 psi - 800 psi). For example, a typical clamping pressure for polypropylene is 4.1 MPa (600 psi), and a typical clamping pressure for polyethylene films is 0.76 MPa (110 psi). More preferred clamping pressures are from 0.48 MPa (70 psi) to 0.69 MPa (100 psi). Most preferred clamping pressure is 0.62 MPa (90 psi). The clamp element may comprise a ring-shaped sliding clamp of 0.6 inches in diameter to hold the pieces in place during welding. However, other suitable clamp elements may also be used. Preferably, the sliding clamp is placed against the thermoplastic piece that the laser beam enters first. Prior to clamping the transparent thermoplastic pieces together, a thin acrylic cover sheet may be placed over the top transparent thermoplastic piece and under the bottom transparent thermoplastic piece. The acrylic cover sheet protects the surface of the thermoplastic from being scratched or marred by the sliding clamp. Preferably, the acrylic cover sheet is about 3 mm thick. Adjusting clamping pressures requires adjusting other parameters to achieve the same result. Factors that can affect clamping pressure include the materials to be welded, for example, melt flow varies from plastic to plastic and grade to grade; thickness of substrates - thin substrates are more flexible and therefore require less pressure; surface finish; parallelism between substrates; strength requirements; welding parameters; laser configuration; and joint design. Good clamp pressure prevents the formation of air bubbles. Weld parameters include laser power, welding speed and time, beam size, clamping pressure, and infrared absorber concentration.

In another embodiment of the invention there is provided a method of making a laminate. The method comprises the step of providing at least two pieces of transparent thermoplastic. Preferably, the transparent thermoplastic comprises polycarbonates, acrylics, polyamides such as nylons, polystyrene, polymethylmethacrylate, polyesters, polyolefins such as polyethylene and polypropylene), polyetheretherketone (PEEK), acrylonitrile butadiene styrene (ABS), polyvinyl chloride (PVC), polyvinylidene fluoride (PVDF), polyurethane, ethylene tetrafluoroethylene (ETFE), or cellulose acetate. The method further comprises the step of providing a clean surface of each transparent thermoplastic. The method further comprises the step of treating a portion of at least one of the pieces of transparent thermoplastic with a near infrared absorbing coating. Preferably, the near infrared absorbing coating is applied in a raster pattern. The method further comprises the step of layering the at least two pieces of transparent thermoplastic. The method further comprises the step of clamping the layered pieces of transparent thermoplastic in place with a clamp element. The method further comprises the step of laser welding the layered pieces of transparent thermoplastic together to form an optically transparent and undistorted laminate. Preferably, the laser is a diode laser. The optically transparent and undistorted laminate may be used for windshields, windows, and canopies on aircraft. It should be noted that the particulars relating to the first embodiment of the method, as described above, apply with equal force to the particulars of this embodiment of the method.

In another embodiment of the invention, a transparency is provided comprising at least two layers of transparent thermoplastic, wherein the layers of transparent thermoplastic have been fused together using a heat source, such that the transparency is optically transparent and undistorted. Preferably, the transparent thermoplastic comprises polycarbonates, acrylics, polyamides such as nylons, polystyrene, polymethylmethacrylate, polyesters, polyolefins such as polyethylene and polypropylene), polyetheretherketone (PEEK), acrylonitrile butadiene styrene (ABS), polyvinyl chloride (PVC), polyvinylidene fluoride (PVDF), polyurethane, ethylene tetrafluoroethylene (ETFE), or cellulose acetate. Preferably, the layers are fused together by laser welding. Preferably, the laser is a diode laser. Preferably, the transparency is used for windshields, windows, and canopies on aircraft. Preferably, the transparency has a sealed joint blocking any ingress of contaminating fluids or chemicals between the layers of transparent thermoplastic. It should be noted that the particulars relating to the first and second embodiments of the methods, as described above, apply with equal force to the particulars of the transparency produced by the method.

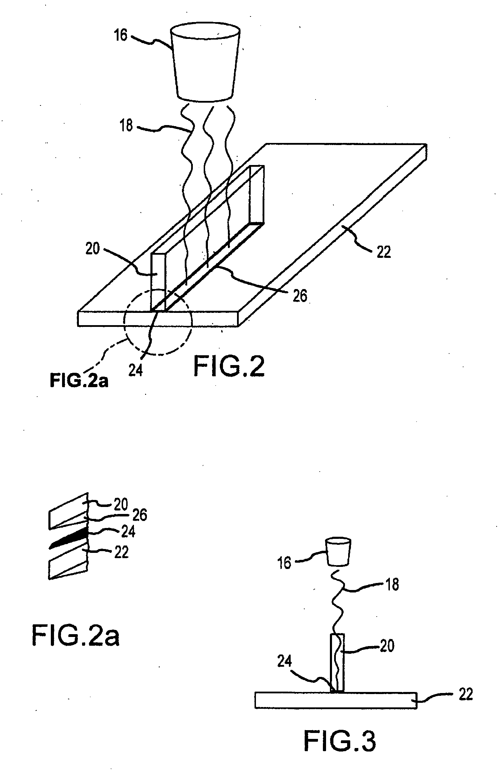

With reference to Fig. 2, a transparency of the invention is shown in the form of a T-joint. A laser 16, such as a diode laser, applies wavelengths 18 of laser energy to a first transparent thermoplastic piece 20 that forms a T-joint with a second transparent thermoplastic piece 22. A coating of near infrared absorbing material 24 is applied to a lower faying surface 26, or surface that is about to be joined, of the first transparent thermoplastic piece 20. Fig. 2a is an enlargement of the 2a portion of Fig. 2. Fig. 2a shows a portion of the first transparent thermoplastic piece 20, a portion of the second transparent thermoplastic piece 22, and a portion of the coating of near infrared absorbing material 24 that is to be applied to lower faying surface 26 on the first transparent thermoplastic piece, so that the material 24 is sandwiched between the first transparent thermoplastic piece 20 and the second transparent thermoplastic piece 22. Fig. 3 is a front view of the T-joint shown in Fig. 2.

With reference to Fig. 4, a transparency of the invention is shown in the form of a two-layer transparent thermoplastic transparency. The laser 16, such as a diode laser, applies wavelengths 18 of laser energy to an upper sheet of transparent thermoplastic 28 that is layered on a lower sheet of transparent thermoplastic 30. A coating of near infrared absorbing material 32 is applied to a lower faying surface 34 on the upper sheet of transparent thermoplastic 28. Clamps 36 are applied to a top surface 38 of the upper sheet of transparent thermoplastic 28. Preferably, pressure is applied over the whole area of the joint. For flat surfaces, preferably the clamp element may be used on the top surface. For curved surfaces, preferably the clamp element may be used on the top and bottom surfaces. The top pressure may be applied over the entire area at once or may be applied locally using a sliding clamp. The two-layer transparent thermoplastic assembly is preferably subjected to a single pass of a laser beam resulting in a double layer weld as shown in Fig. 4. A total laser power of 300W is preferably used at a welding speed of 500 mm/minute. However, other suitable laser powers and speeds may be used depending on the thickness of the thermoplastic pieces and the type of thermoplastic used. Fig. 4a is an enlargement of the 4a portion of Fig. 4. Fig. 4a shows a portion of the upper sheet of transparent thermoplastic 28, a portion of the lower sheet of transparent thermoplastic 30, and a portion of the coating of near infrared absorbing material 32 that is applied to the lower faying surface 34 on the upper sheet of transparent thermoplastic 28, so that the material 32 is sandwiched between the upper sheet of transparent thermoplastic 28 and the lower sheet of transparent thermoplastic 30.

With reference to Fig. 5, a transparency of the invention is shown in the form of a three-layer transparent thermoplastic transparency. An upper sheet of transparent thermoplastic 40 is layered on a middle sheet of transparent thermoplastic 42, which in turn, is layered on a lower sheet of transparent thermoplastic 44. A first coating of near infrared absorbing material 46 is applied to a lower faying surface 48 on the upper sheet of transparent thermoplastic 40. A second coating of near infrared absorbing material 50 is applied to a lower faying surface 52 on the middle sheet of transparent thermoplastic 42. The laser 16, such as a diode laser, applies a short wavelength 54 (such as 800 nm) of laser energy to the first coating of near infrared absorbing material 46, and the laser 16 applies a long wavelength 56 (such as 940 nm) of laser energy to the second coating of near infrared absorbing material 50. Clamps 36 are applied to a top surface 58 of the upper sheet of transparent thermoplastic 40. Preferably, pressure is applied over the whole area of the joint. For flat surfaces, preferably the clamp element may be used on the top surface. For curved surfaces, preferably the clamp element may be used on the top and bottom surfaces. The top pressure may be applied over the entire area at once or may be applied locally using a sliding clamp. The three-layer transparent thermoplastic assembly is preferably subjected to a single pass of a laser beam containing both wavelengths resulting in a triple layer weld as shown in Fig. 5. A total laser power of 300W is preferably used at a welding speed of 500 mm/minute. However, other suitable laser powers and speeds may be used depending on the thickness of the thermoplastic pieces and the type of thermoplastic used. Fig. 5a is an enlargement of the 5a portion of Fig.5. Fig. 5a shows a portion of the upper sheet of transparent thermoplastic 40, a portion of the middle sheet of transparent thermoplastic 42, and a portion of the lower sheet of transparent thermoplastic 44. Fig. 5a further shows a portion of the first coating of near infrared absorbing material 46 that is applied to the lower faying surface 48 on the upper sheet of transparent thermoplastic 40, so that the material 46 is sandwiched between the upper sheet of transparent thermoplastic 40 and the middle sheet of transparent thermoplastic 42. Fig. 5a further shows a portion of the second coating of near infrared absorbing material 50 that is applied to the lower faying surface 52 on the middle sheet of transparent thermoplastic 42, so that the material 50 is sandwiched between the middle sheet of transparent thermoplastic 46 and the lower sheet of transparent thermoplastic 44.

The method and transparency of the invention provide for the welding or fusing together of optically transparent thermoplastics to achieve an integrated optically clear joint. Preferably, the transparency of each of the embodiments of the invention has a sealed joint blocking any ingress of contaminating fluids or chemicals between the layers of transparent thermoplastic. Preferably, the transparent thermoplastic layers are joined together at an atomic level. The method provides not only the benefits of laser welding but also colorless welds can be achieved, simultaneous welding of multiple layers can be achieved, and it is possible to selectively weld only where the near infrared absorbing material coating is applied. The method and transparency provide numerous benefits that result in greater durability and longer life of the component parts being welded.

Many modifications and other embodiments of the invention will come to mind to one skilled in the art to which this invention pertains having the benefit of the teachings presented in the foregoing descriptions and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A method of making a transparency, the method comprising the steps of:
layering at least two pieces of transparent thermoplastic, wherein a portion of at least one of the pieces of transparent thermoplastic is treated with a near infrared absorbing material; and,
fusing the layered pieces of transparent thermoplastic together using a heat source to form an optically transparent and undistorted transparency.

2. The method of claim 1 wherein the transparent thermoplastic is selected from the group consisting of polycarbonates, acrylics, polyamides comprising nylons, polystyrene, polymethylmethacrylate, polyesters, polyolefins comprising polyethylene and polypropylene, polyetheretherketone (PEEK), acrylonitrile butadiene styrene (ABS), polyvinyl chloride (PVC), polyvinylidene fluoride (PVDF), polyurethane, ethylene tetrafluoroethylene (ETFE), and cellulose acetate.

3. The method of claim 1 further comprising prior to the layering step and treating with near infrared absorbing material, the step of providing a clean surface of at least one of the at least two pieces of transparent thermoplastic that is to be exposed to the heat source.

4. The method of claim 1 further comprising the step prior to the fusing step of clamping the layered pieces of transparent thermoplastic in place with one or more clamp elements.

5. The method of claim 1 wherein the step of fusing the layered pieces together using a heat source comprises laser welding.

6. The method of claim 1 wherein the heat source is a diode laser.

7. A method of making a laminate, the method comprising the steps of:
providing at least two pieces of transparent thermoplastic;
providing a clean surface of each transparent thermoplastic;
treating a portion of at least one of the pieces of transparent thermoplastic with a near infrared absorbing coating;
layering the at least two pieces of transparent thermoplastic;
clamping the layered pieces of transparent thermoplastic in place with one or more clamp elements; and,
laser welding the layered pieces of transparent thermoplastic together to form an optically transparent and undistorted laminate.

8. The method of claim 7 wherein the transparent thermoplastic is selected from the group consisting of polycarbonates, acrylics, polyamides comprising nylons, polystyrene, polymethylmethacrylate, polyesters, polyolefins comprising polyethylene and polypropylene), polyetheretherketone (PEEK), acrylonitrile butadiene styrene (ABS), polyvinyl chloride (PVC), polyvinylidene fluoride (PVDF), polyurethane, ethylene tetrafluoroethylene (ETFE), and cellulose acetate.

9. The method of claim 7 wherein the near infrared absorbing coating is applied in a raster pattern.

10. The method of claim 7 wherein the laser is a diode laser.

11. A transparency comprising at least two layers of transparent thermoplastic, wherein the layers of transparent thermoplastic have been fused together using a heat source, such that the transparency is optically transparent and undistorted.

12. The transparency of claim 11 wherein the transparent thermoplastic is selected from the group consisting of polycarbonates, acrylics, polyamides comprising nylons, polystyrene, polymethylmethacrylate, polyesters, polyolefins comprising polyethylene and polypropylene), polyetheretherketone (PEEK), acrylonitrile butadiene styrene (ABS), polyvinyl chloride (PVC), polyvinylidene fluoride (PVDF), polyurethane, ethylene tetrafluoroethylene (ETFE), and cellulose acetate.

13. The transparency of claim 11 wherein the layers are fused together by laser welding.

14. The transparency of claim 11 wherein the transparency is used for windshields, windows, and canopies on aircraft.

15. The transparency of claim 11 wherein the transparency has a sealed joint blocking any ingress of contaminating fluids or chemicals between the layers of transparent thermoplastic.
